(19) Europäisches Patentamt

European Patent Office

Office européen des brevets

(11) **EP 1 570 199 B1**

(12) **EUROPÄISCHE PATENTSCHRIFT**

| | |
|---|---|
| (45) Veröffentlichungstag und Bekanntmachung des Hinweises auf die Patenterteilung:<br>**28.06.2006 Patentblatt 2006/26** | (51) Int Cl.:<br>***F16K 37/00*** *(2006.01)* |
| (21) Anmeldenummer: **03785558.2** | (86) Internationale Anmeldenummer:<br>**PCT/DE2003/004096** |
| (22) Anmeldetag: **11.12.2003** | (87) Internationale Veröffentlichungsnummer:<br>**WO 2004/053371 (24.06.2004 Gazette 2004/26)** |

(54) **VERFAHREN ZUR ÜBERWACHUNG EINER ROHRLEITUNG SOWIE STELLUNGSREGLER FÜR EIN REGELVENTIL**

METHOD FOR MONITORING A PIPELINE AND POSITION REGULATOR FOR A CONTROL VALVE

PROCEDE DE CONTROLE D'UNE CONDUITE TUBULAIRE ET REGULATEUR DE POSITION DESTINE A UNE SOUPAPE DE REGULATION

| | |
|---|---|
| (84) Benannte Vertragsstaaten:<br>**DE FR GB** | (73) Patentinhaber: **SIEMENS AKTIENGESELLSCHAFT**<br>**80333 München (DE)** |
| (30) Priorität: **11.12.2002 DE 10257910** | (72) Erfinder: **HEER, Klaus-Peter**<br>**76863 Herxheim (DE)** |
| (43) Veröffentlichungstag der Anmeldung:<br>**07.09.2005 Patentblatt 2005/36** | (56) Entgegenhaltungen:<br>**EP-A- 0 708 389 DE-A- 4 342 554**<br>**DE-A- 19 947 129** |

**Beschreibung**

Die Erfindung betrifft ein Verfahren zur Überwachung einer Rohrleitung auf langsame Verringerung des freien Innenquerschnitts mit Hilfe der Stellung eines Regelventils in der Rohrleitung sowie einen Stellungsregler für ein Regelventil zur Durchführung des Verfahrens.

In vielen Bereichen der Prozess- und Energietechnik hängt der störungsfreie Betrieb einer Anlage vom Zustand der Rohrleitungen, insbesondere von deren Durchlässigkeit für das jeweilige Prozessmedium ab. Zur Vermeidung kostenintensiver, irregulärer Betriebsunterbrechungen wäre es sinnvoll, wenn bereits im Vorfeld erkannt werden könnte, ob sich eine Rohrleitung im Prozessbetrieb verstopft oder ob sich der freie Innenquerschnitt der Rohrleitung langsam verringert. Derartige Fehler sollten möglichst bereits im Anfangsstadium erkannt werden, bevor eine Verstopfung einer Rohrleitung einen Stillstand der Anlage verursachen kann. Durch eine rechtzeitige Vorwarnung könnte eine Betriebsstörung vermieden werden, indem Wartungsprozesse optimiert und rechtzeitig geeignete Gegenmaßnahmen ergriffen werden.

Bisher wurden Anlagenfahrer mehr oder weniger überrascht, wenn der Durchfluss durch eine Rohrleitung plötzlich durch eine Verstopfung blockiert wurde. Der meist unerwartet auftretende Störfall verursacht dann Produktionsausfälle und damit verbundene, erhebliche Kosten. Eine Möglichkeit, eine Verringerung des freien Leitungsquerschnitts im Vorfeld zu erkennen, ist eine endoskopische Untersuchung der Rohrleitung, die jedoch nur bei Unterbrechung des Prozesses durchführbar ist und somit einen erheblichen Aufwand bedeutet.

Aus der DE-PS 43 42 554 ist ein Verfahren zur Überwachung von Abgastransportsystemen mit einem Regelventil als Stellglied für eine druckgeregelte Abgasabgabe bekannt. Anhand der Kennlinie des Regelventils an der Abgasabgabestelle wird in Abhängigkeit des aktuellen Volumenstroms und des geregelten Abgasdrucks der Druck bestimmt, der bei vollständig geöffnetem Regelventil vorliegen würde. Der sich bei maximalem Volumenstrom ergebende maximale Druckverlust wird anhand des Eingabedrucks und des anhand der Kennlinie ermittelten Abgabedrucks bei vollständig geöffnetem Regelventil ermittelt, als Funktion der Zeit dargestellt und mit dem maximal zulässigen Druckverlust verglichen. Bei Annäherung des Wertes des maximalen Druckverlusts an den Wert des maximal zulässigen Druckverlustes wird der Zeitpunkt der Reinigung des Abgastransportsystems festgelegt. Das Verfahren hat den Nachteil, dass es speziell für die Erfordernisse eines Abgastransportsystems ausgelegt und nicht ohne Weiteres auf andere Rohrleitungssysteme anwendbar ist. Darüber hinaus wird nicht berücksichtigt, dass bei einer Ermittlung des Abgabedrucks für ein vollständig geöffnetes Regelventil anhand dessen Kennlinie wegen des erhöhten Volumenstroms zusätzlich der Druckverlust über der Rohrleitung ansteigt. Die Überwachung ist daher vergleichsweise ungenau.

Ein Stellungsregler für ein Regelventil mit einem Positionsgeber zur Erfassung der Stellung des Ventils und mit einer Einrichtung zur Auswertung der erfassten Stellung ist beispielsweise aus der DE 199 47 129 A1 bekannt. Dort wird ein System zur Diagnose des aktuellen Ventilzustands anhand eines aufgenommenen Schallsignals beschrieben. Insbesondere eine Leckage eines geschlossenen Ventils wird akustisch detektiert.

Der Erfindung liegt die Aufgabe zugrunde, ein Verfahren zur Überwachung einer Rohrleitung auf langsame Verringerung des freien Innenquerschnitts zu finden, das bei einer Vielzahl prozesstechnischer Anlagen ohne großen Aufwand durchführbar ist sowie einen Stellungsregler für ein Regelventil, der zur Durchführung des Verfahrens geeignet ist, zu schaffen.

Zur Lösung dieser Aufgabe weist das neue Verfahren der eingangs genannten Art die im kennzeichnenden Teil des Anspruchs 1 angegebenen Verfahrensschritte auf. In den abhängigen Ansprüchen sind vorteilhafte Weiterbildungen, in Anspruch 7 ein zur Durchführung des Verfahrens geeigneter Stellungsregler für ein Regelventil beschrieben.

Die Erfindung hat den Vorteil, dass die Überwachung einer Rohrleitung auf langsames Verstopfen oder Zuwachsen allein mit den ohnehin bei Regelventilen vorhandenen Mitteln durchführbar ist. Lediglich die Auswerteeinrichtung für den Stellungswert des Ventils, der von einem Positionsgeber, der als Bestandteil des Stellungsreglers angesehen werden kann, erfasst wird, muss zur Durchführung des Verfahrens angepasst werden. Da derartige Auswerteeinrichtungen üblicherweise durch eine Recheneinheit mit geeigneter Software realisiert werden, erfordert dies lediglich eine Anpassung des von der ohnehin vorhandenen Recheneinheit abzu-arbeitenden Auswerteprogramms. Die Überwachungs-funktion kann leicht deaktiviert werden, wenn die Voraussetzungen zur Überwachung nicht oder zeitweise nicht gegeben sind. Insbesondere bei einer Anwendung eines Regelventils für eine Regelung auf konstanten Mediendurchfluss durch eine Rohrleitung ist ein im Wesentlichen konstanter Durchfluss des Mediums im überwiegenden Teil der Betriebszeit gegeben. Durch die Beobachtung und Auswertung der zeitlichen Veränderung der Hubstellung des Regelventils wird eine langsame Verringerung des freien Innenquerschnitts der Rohrleitung erkannt. Muss das Ventil bei im Wesentlichen konstantem Durchfluss eines Mediums weiter als eine vorgebbare Schwelle geöffnet werden, so wird ein Signal zur Anzeige der Schwellwertüberschreitung ausgegeben. Aufgrund dieses Anzeigesignals können frühzeitig ge-eignete Gegenmaßnahmen ergriffen werden. Beispiels-weise kann das Signal als Meldesignal für Wartungsbedarf interpretiert werden, so dass beim nächsten War-tungszyklus der prozesstechnischen Anlage Rohrleitun-gen gereinigt oder ausgetauscht werden. Betriebsstörungen oder Produktionsausfälle können damit vermieden werden.

Vorzugsweise wird die erste Stellung des Regelventils zu Beginn des Betriebs der prozesstechnischen Anlage, wenn die Rohrleitung noch frei von Ablagerungen ist, ermittelt und abgespeichert. Daraus ergibt sich bei einer Regelung auf konstanten Durchfluss ein Öffnungsgrad des Ventils, der je nach Ausgestaltung der Anlage unterschiedlich sein kann.

In vorteilhafter Weise kann das Verfahren an den jeweiligen Anwendungsfall angepasst werden, indem der Schwellwert in Abhängigkeit der ersten Stellung vorgegeben wird. Der Schwellwert wird dabei in den Bereich zwischen vollständiger Öffnung des Ventils und der ersten Stellung gelegt. Die optimale Lage ist wiederum vom jeweiligen Anwendungsfall, insbesondere von der Ablagerungsgeschwindigkeit und dem zeitlichen Abstand zwischen den Wartungszyklen, abhängig. Als vorteilhaft und für viele Anwendungsfälle geeignet hat es sich erwiesen, ein Anzeigesignal für eine Schwellwertüberschreitung auszugeben, wenn der über die erste Stellung hinaus verbleibende Stellbereich zur Öffnung des Ventils zu 80% verbraucht ist. Damit erfolgt die Anzeige zu einem Zeitpunkt, zu welchem noch ein ausreichend sicherer Abstand vor dem Eintritt von Regelungsproblemen besteht, also bevor eine Regelung auf konstanten Durchfluss wegen zu großen Ablagerungen in der Rohrleitung nicht mehr möglich ist.

Da mit einem langfristig monoton fortschreitenden Ablagerungsprozess auch eine entsprechend langfristige monotone Verschiebung der Stellung des Regelventils einhergeht, können kurzfristige Ausreißer in der Verschiebung, die beispielsweise durch Druckschwankungen verursacht sein können, durch ein Tiefpassfilter, insbesondere durch Bilden eines gleitenden Mittelwertes, bezüglich ihres Einflusses auf das Diagnoseergebnis unterdrückt werden. Dadurch wird ein vorzeitiges Ansprechen der Rohrleitungsüberwachung und eine vorzeitige Ausgabe eines Anzeigesignals bei derartigen Schwankungen vermieden. Selbstverständlich können auch andere Möglichkeiten zur Überprüfung der Plausibilität des Zusammenhangs zwischen Ventilöffnung und Ablagerungen in der Rohrleitung angewandt werden.

Zusätzlich oder alternativ zum direkten Schwellwertvergleich kann die zeitliche Änderung der Position des Regelventils ermittelt und der Zeitpunkt abgeschätzt werden, wann voraussichtlich die Stellung des Regelventils den vorgebbaren Schwellwert überschreiten wird. Das hat den Vorteil, dass eine bessere Wartungsplanung ermöglicht wird, da nicht nur der aktuelle Verstopfungszustand der Rohrleitung, sondern auch die Geschwindigkeit der Verringerung des freien Innenquerschnitts berücksichtigt wird.

Zur Vermeidung einer verfrühten Ausgabe eines Anzeigesignals für eine Schwellwertüberschreitung kann es vorteilhaft sein, den Druck des Mediums in der Rohrleitung zu ermitteln und bei Überschreiten einer zulässigen Abweichung von einem mittleren Wert des Drucks die Überwachung der Rohrleitung auf Verstopfung zu unterbrechen. Die Messung und Auswertung des Mediendrucks in der Rohrleitung kann mit einem einfachen Druckschalter beispielsweise an einer Einspeisestelle hinter einer Pumpe durchgeführt werden. Üblicherweise befinden sich in prozesstechnischen Anlagen vorzugsweise an den Rohrleitungsenden ohnehin Druckmessumformer, deren Messwert ohne weiteren technischen Aufwand in die Auswertung einbezogen werden kann.

Wenn jedoch gewisse Druckveränderungen unvermeidlich sind und diese zu einer allzu häufigen Unterbrechung der Überwachung führen könnten, ist es vorteilhaft, zur Unterdrückung des Einflusses von Druckschwankungen auf die Stellung des Ventils eine Druckkompensation vorzunehmen, die anhand einer vorbestimmten Abhängigkeit der Ventilstellung vom Mediendruck durchgeführt werden kann.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1      eine Prinzipdarstellung eines in einer Rohrleitung eingebauten Regelventils und

Figur 2      den prinzipiellen Verlauf der Ventilstellung bei zunehmender Verstopfung der Rohrleitung.

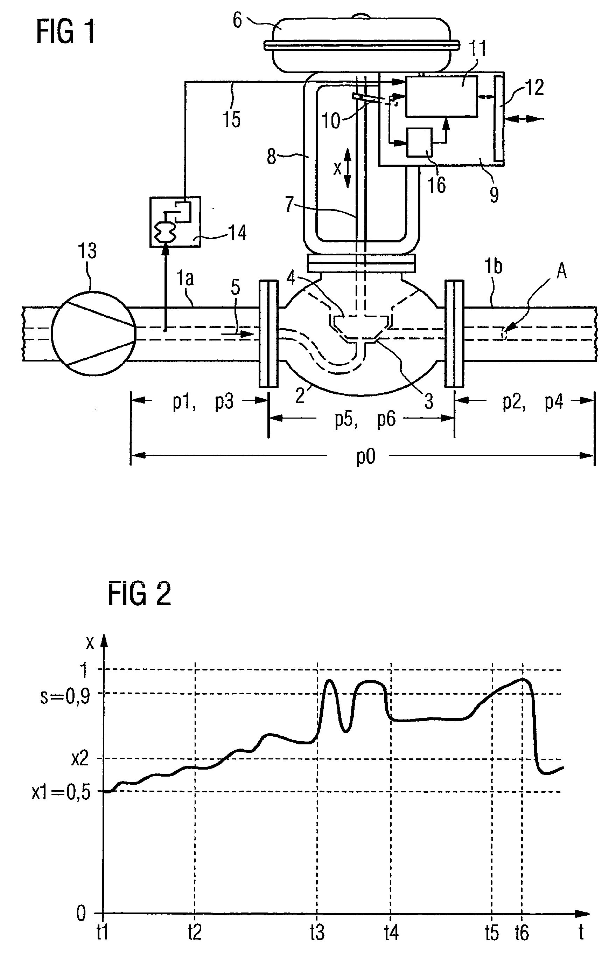

In einer Rohrleitung 1 mit Rohrleitungsabschnitten 1a und 1b einer nicht weiter dargestellten prozesstechnischen Anlage ist gemäß Figur 1 ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden. An dem Joch 8 ist ein Stellungsregler 9 angebracht. Die jeweilige Stellung x des Ventils wird durch einen Positionsgeber 10 erfasst und einer Auswerteeinrichtung 11 zugeführt, welche diesen mit einem über eine Datenschnittstelle 12 von einem Feldbus mit digitaler oder analoger Datenübertragung zugeführten Sollwert vergleicht und ausgangsseitig den pneumatischen Antrieb 6 im Sinne einer Ausregelung der Regeldifferenz steuert. Der Sollwert wird durch einen in der Figur nicht dargestellten Regler so vorgegeben, dass sich ein im Wesentlichen konstanter Durchfluss des Mediums 5 durch die Rohrleitung 1 und somit durch das Ventil 2 einstellt. In dem gezeigten Ausführungsbeispiel ist zusätzlich eine Pumpe 13 in die Rohrleitung 1 eingebaut, welche den erforderlichen Fließdruck erzeugt. Ein Druckschalter 14 greift in Fließrichtung hinter der Pumpe 13 den in der Rohrleitung 1 herrschenden Mediendruck ab und liefert ein Signal 15 an die Auswerteeinrichtung 11, welches ein Überschreiten einer zulässigen Abweichung von einem mittleren Wert des Drucks anzeigt. Damit kleinere Schwankungen der Ventilstellung, die unterschiedlichste Ursachen haben können, nicht unmittelbar zu einem Ansprechen der Rohrleitungsüberwachung führen, wird das Stellungssignal zusätzlich zur direkten Zuführung zur Auswerteeinrichtung 11 über einen Tiefpass 16 auf die Auswerteeinrichtung 11 gegeben. Dieser im Ausführungsbeispiel getrennt dargestellte Tiefpassfilter, der eine gleitende Mittelwertbildung realisiert, kann selbstverständlich bei geeigneter Programmierung alternativ durch die Auswerteeinrichtung 11 selbst realisiert sein.

Zur Erläuterung des Funktionsprinzips der Erfindung sind in Figur 1 weiterhin am Bereich des Rohrabschnitts 1a, am Ventil 2 und am Bereich des Rohrabschnitts 1b zu einem ersten Zeitpunkt bei einem Durchfluss des Mediums entstehende Druckdifferenzen $\Delta p1$, $\Delta p5$ bzw. $\Delta p2$ und zu einem zweiten, späteren Zeitpunkt entstehende Druckdifferenzen $\Delta p3$, $\Delta p6$ bzw. $\Delta p4$ angetragen. Mit der Druckdifferenz $\Delta p0$ ist die gesamte Druckdifferenz bezeichnet, die über der Rohrleitung 1 mit den beiden Rohrleitungsabschnitten 1a und 1b sowie über dem Ventil 2 durch den Fluss des Mediums mit konstanter Fließgeschwindigkeit entsteht. Die Überwachung der Rohrleitung auf langsame Verringerung eines freien Innenquerschnitts A erfolgt durch Ermittlung und Auswertung der zeitlichen Veränderung der mit dem Positionsgeber 10 erfassten Stellung x des Ventils 2, indem durch die Auswerteeinrichtung 11 des Stellungsreglers 9 chronologisch der zeitlich gleitende Mittelwert der Ventilstellung archiviert und ausgewertet wird. Bei Überschreiten eines vorgebbaren Schwellwerts wird eine Warnmeldung als Telegramm über den an die Datenschnittstelle 11 angeschlossenen Feldbus oder ein Strom- oder Spannungssignal an eine Leitstelle ausgegeben. Dadurch wird eine drohende Totalverstopfung der Rohrleitung 1 signalisiert. Im Folgenden soll der Zusammenhang zwischen der Verstopfung der Rohrleitung 1 und der Stellung x des Ventils 2 erläutert werden:

Im Betrieb einer prozesstechnischen Anlage regelt das Regelventil den Durchfluss durch die Rohrleitung 1 bei einer durch den Aufbau der Anlage vorgegebenen und weitgehend konstanten Druckdifferenz $\Delta p0$ auf einen von einem Prozessregler oder Leitsystem geforderten, meist konstanten Wert. Dabei ist der Wert der Druckdifferenz $\Delta p0$ zu einem ersten Zeitpunkt, vorzugsweise bei der Inbetriebnahme mit vollständig von Ablagerungen freien Rohrleitungen, gleich der Summe der Druckdifferenzen $\Delta p1$, $\Delta p5$ und $\Delta p2$. Es gilt somit:

$$\Delta p1 + \Delta p2 + \Delta p5 = \Delta p0.$$

Dabei werden die Druckdifferenzen $\Delta p1$ und $\Delta p2$ durch den jeweiligen Strömungswiderstand im Rohrleitungsabschnitt 1a bzw. 1b und die Druckdifferenz $\Delta p5$ durch den Strömungswiderstand des Ventils zum ersten Zeitpunkt bestimmt. Die Druckdifferenz $\Delta p5$ ist abhängig von der jeweiligen Stellung des Ventils 2, die mit dem Positionsgeber 10 erfasst wird, und dem zum ersten Zeitpunkt herrschenden Durchfluss. Bei Einsatz des Ventils 2 in einem Regelkreis zur Regelung eines vorgebbaren, im Wesentlichen konstanten Durchflusses wird die Ventilstellung so durch den Antrieb 6 eingestellt, dass der tatsächliche Durchfluss des Mediums 5 durch die Rohrleitung 1 zumindest näherungsweise dem vorgegebenen Wert entspricht.

Bilden sich im Laufe der Zeit Ablagerungen an den Innenwänden der Rohrleitungsabschnitte 1a und 1b der Rohrleitung 1, so steigen Strömungswiderstand und Druckdifferenzen an. Für die zu einem zweiten, späteren Zeitpunkt in den Rohrleitungsabschnitten 1a und 1b bei dem gleichen Durchflusswert herrschenden Druckdifferenzen $\Delta p3$ bzw. $\Delta p4$ gilt somit:

$$\Delta p3 + \Delta p4 > \Delta p1 + \Delta p2.$$

Bei gleichbleibender Leistung der Pumpe 13 und auch sonst unverändertem Prozess ist die Gesamtdruckdifferenz $\Delta p0$ über der Rohrleitung 1 und dem Ventil 2 im Wesentlichen konstant.

Das heißt, dass durch das Ventil 2 zu dem zweiten Zeitpunkt eine geringere Druckdifferenz $\Delta p6$ eingestellt werden muss, um den im Wesentlichen konstanten Durchfluss des Mediums 5 durch die Rohrleitung 1 aufrechtzuerhalten. Die Stellung x des Ventils 2 wird also in Richtung einer Erhöhung der Ventilöffnung verändert. Die jeweilige Stellung x des Ventils 2 wird, wie bereits oben erläutert, durch den Positionsgeber 10 erfasst und an die Auswerteeinrichtung 11 sowohl direkt als auch über einen Tiefpass 16 weitergegeben. Durch eine in der Auswerteeinrichtung 11 vorgenommene Abspeicherung des gleitenden Mittelwerts der Ventilstellung vorzugsweise in regelmäßigen Abständen kann der tendenzielle Verlauf einer Verstopfung der Rohrleitung 1 bestimmt werden. Wenn die Ventilstellung, welche die Öffnung des Ventils 2 wiedergibt, einen vorgegebenen Schwellwert überschreitet, wird ein Signal zur Anzeige dieser Überschreitung über die Schnittstelle 12 auf den Feldbus ausgegeben. Diese kann in einem übergeordneten Leitsystem als Warnsignal interpretiert werden, so dass rechtzeitig geeignete Maßnahmen ergriffen werden können, bevor es zu Störungen in der prozesstechnischen Anlage kommt. Mit Hilfe einer geeigneten Auswertung des Verlaufs der Stellungswerte kann der Zeitpunkt ermittelt werden, wann die Rohrleitung 1 gereinigt oder ausgetauscht werden muss. Kosten, die mit einem unvorhergesehenen Anlagenstillstand verbunden wären, werden somit vermieden. Zudem sind keinerlei endoskopische Vorinspektionen, die mit hohem Aufwand verbunden sind, erforderlich. Mit dem Druckschalter 14 wird der von der Pumpe 13 abgegebene Druck erfasst. Mit diesem Druckschalter 14 wird ein Signal 15 erzeugt, das ein Überschreiten einer zulässigen Abweichung von einem vorgebbaren oder mittleren Druckwert anzeigt. Zeitbereiche, in denen diese Überschreitung erfolgt, können von der Auswertung der Stellungswerte zur Überwachung der Rohrleitung auf Verringerung des freien Innenquerschnitts A ausgenommen werden. Alternativ dazu ist es selbstverständlich möglich, den Druckschalter 14 durch einen Drucksensor zu ersetzen, der Messwerte des Drucks an die Auswerteeinrichtung 11 liefert. In diesem Fall kann der Einfluss von Schwankungen des Pumpendrucks auf das Überwachungsergebnis eliminiert werden, indem der Zusammenhang zwischen Stellung des Ventils 2 und Druck der Pumpe 13 ermittelt und der Einfluss durch Einfügen eines geeigneten Kompensationsglieds in der Auswerteeinrichtung 11 ausgeglichen wird.

Figur 2 zeigt einen für die Praxis typischen Verlauf der Werte der Stellung x eines Ventils mit zunehmenden Ablagerungen in den Rohrleitungen einer prozesstechnischen Anlage. An der Abszisse ist die Zeit t, an der Ordinate die Stellung x eines Ventils mit einem normierten Wertebereich von 0 bis 1 aufgetragen. Eine Stellung x = 0 entspricht einem geschlossenen, eine Stellung x = 1 einem vollständig geöffneten Ventil. Zu einem ersten Zeitpunkt t1, vorzugsweise bei der Inbetriebnahme der prozesstechnischen Anlage, wird ein Wert x1 = 0,5 der Ventilstellung erfasst und abgespeichert. Während des späteren Betriebs der Anlage werden in regelmäßigen Abständen weitere Werte der Stellung gemessen und abgespeichert, so dass sich der in Diagramm dargestellte Verlauf ergibt. In Abhängigkeit des bei der Inbetriebnahme gemessenen Werts x1 = 0,5 der Ventilstellung wird ein Schwellwert s berechnet, bei dessen Überschreitung von derart hohen Ablagerungen in den Rohrleitungen ausgegangen werden muss, dass im nächsten Wartungszyklus eine Reinigung oder ein Austausch der Rohrleitung erforderlich ist. Im gezeigten Ausführungsbeispiel wird der Schwellwert s festgelegt auf 80% des verbleibenden Stellbereichs, der noch zur weiteren Öffnung des Ventils zur Verfügung steht. Die Schwelle s wird also auf den Wert 0,9 gesetzt. Zu späteren Zeiten ermittelte Werte der Ventilstellung, beispielsweise eine Stellung x2 zu einem zweiten Zeitpunkt t2, werden mit dem auf die beschriebene Weise vorgebenen Schwellwert s verglichen. Ein bei Überschreiten des Schwellwerts s erzeugtes Anzeigesignal wird als Wartungsbedarf des Rohrleitungssystems interpretiert. Ein Zeitraum zwischen den Zeiten t3 und t4, in welchem überhöhte Druckschwankungen in der überwachten Rohrleitung festgestellt wurden, wird bei der Auswertung zur Überwachung der Rohrleitung auf langsame Verringerung des freien Innenquerschnitts ausgeblendet, da hier nicht ohne Weiteres von der momentanen Stellung des Ventils auf die Verstopfung der Rohrleitung geschlossen werden kann. Zu einem Zeitpunkt t5 überschreitet der gemessene Wert der Ventilstellung den Schwellwert s, so dass hier ein entsprechendes Anzeigesignal erzeugt wird. Im darauf folgenden Wartungszyklus zu einem Zeitpunkt t6 wird die verstopfte Rohrleitung ausgetauscht. Nach erfolgter Wartung kann wieder mit erheblich geringfügiger geöffnetem Ventil im Wesentlichen derselbe Durchfluss durch die Rohrleitung eingestellt werden.

Anhand des gezeigten Verlaufs wird deutlich, dass alternativ oder ergänzend zur oben beschriebenen Auswertung einer tatsächlichen Schwellwertüberschreitung der Zeitpunkt einer erwarteten Schwellwertüberschreitung anhand einer Trendanalyse ermittelt und ausgegeben werden kann.

**Patentansprüche**

1. Verfahren zur Überwachung einer Rohrleitung auf langsame Verringerung des freien Innenquerschnitts (A) mit Hilfe der Stellung (x) eines Regelventils (2) in der Rohrleitung (1), **dadurch gekennzeichnet, dass** bei im Wesentlichen konstantem Durchfluss eines Mediums durch das Regelventil (2) zu einem ersten Zeitpunkt (t1) eine erste Stellung (x1) des Regelventils (2) ermittelt und abgespeichert wird, dass zumindest zu einem zweiten, späteren Zeitpunkt (t2) eine zweite Stellung (x2) des Regelventils (2) ermittelt wird, dass ermittelt wird, wann die Stellung (x) des Ventils (2) einen vorgebbaren Schwellwert (s) für eine Ventilöffnung überschreitet, und dass ein Signal zur Anzeige der Überschreitung und/oder des Überschreitungszeitpunktes ausgegeben wird.

2. Verfahren nach Anspruch 1, **dadurch gekennzeichnet, dass** der Schwellwert (s) in Abhängigkeit der ersten Stellung (x1) des Regelventils (2) vorgegeben wird, insbesondere zu 80%iger Öffnung bezogen auf den Stellbereich zwischen vollständiger Ventilöffnung und der ersten Stellung (x1).

3. Verfahren nach Anspruch 1 oder 2, **dadurch gekennzeichnet, dass** das Stellungssignal durch ein Tiefpassfilter (16), insbesondere durch Bilden eines gleitenden Mittelwerts, vor Ermittlung der Ventilstellung geglättet wird.

4. Verfahren nach einem der vorhergehenden Ansprüche, **dadurch gekennzeichnet, dass** die zeitliche Änderung der Position (x) des Regelventils (2) ermittelt und der Zeitpunkt abgeschätzt wird, wann voraussichtlich die Stellung (x) des Regelventils (2) den vorgebbaren Schwellwert (s) überschreiten wird.

5. Verfahren nach einem der vorhergehenden Ansprüche, **dadurch gekennzeichnet, dass** der Druck des Mediums in der Rohrleitung (1) ermittelt wird und dass bei Überschreiten einer zulässigen Abweichung von einem mittleren Wert des Drucks die Überwachung der Rohrleitung (1) auf Verringerung des freien Innenquerschnitts (A) unterbrochen wird.

**6.** Verfahren nach einem der vorhergehenden Ansprüche, **dadurch gekennzeichnet, dass** zur Unterdrückung des Einflusses von Druckschwankungen auf die Stellung des Ventils eine Druckkompensation anhand einer vorbestimmten Abhängigkeit der Ventilstellung vom Mediendruck durchgeführt wird.

**7.** Stellungsregler für ein Regelventil (2) mit einem Positionsgeber (10) zur Erfassung der Stellung (x) des Ventils (2) und mit einer Einrichtung (11) zur Auswertung der erfassten Stellung, **dadurch gekennzeichnet, dass** die Auswerteeinrichtung (11) derart ausgebildet ist, dass bei einer Verwendung des Regelventils (2) in einem Regelkreis zur Regelung auf konstanten Durchfluss eines Mediums durch eine Rohrleitung (1) zur Überwachung der Rohrleitung auf langsame Verringerung des freien Innenquerschnitts (A) mit Hilfe der Stellung (x) des Regelventils (2) zu einem ersten Zeitpunkt (t1) eine erste Stellung (x1) des Regelventils (2) ermittelt und abgespeichert wird, dass zu einem zweiten, späteren Zeitpunkt (t2) zumindest eine zweite Stellung (x2) des Regelventils (2) ermittelt wird, dass ermittelt wird, wann die Stellung (x) des Ventils (2) einen vorgebbaren Schwellwert (s) für eine Ventilöffnung überschreitet, und dass ein Signal zur Anzeige der Überschreitung und/oder des Überschreitungszeitpunktes ausgegeben wird.

## Claims

**1.** Method for monitoring a pipeline in order to detect the slow reduction of the unobstructed internal cross section (A) by reference to the position (x) of a control valve (2) in the pipeline (1), **characterized in that** when the rate of flow of a medium through the control valve (2) is basically constant an initial position (x1) of the control valve (2) is determined and stored at a first time (t1), that at least a second position (x2) of the control valve (2) is determined at a second, later time (t2), that the time at which the position (x) of the valve (2) exceeds a predeterminable threshold value (s) for a valve opening is determined, and that a signal is emitted in order to indicate that the threshold value has been exceeded and/or the time at which it was exceeded.

**2.** Method according to Claim 1, **characterized in that** the threshold value (S) is predetermined as a function of the initial position (x1) of the control valve (2), in particular at 80% opening relative to the adjustment range between full valve opening and the initial position (x1).

**3.** Method according to Claim 1 or 2, **characterized in**

**that** before determining the valve position the position signal is smoothed by a low-pass filter (16), in particular by forming a sliding average.

**4.** Method according to any one of the preceding Claims, **characterized in that** the variation in the position (x) of the control valve (2) over time is determined and the time at which the position (x) of the control valve (2) is expected to exceed the predeterminable threshold value (s) is estimated.

**5.** Method according to any one of the preceding Claims, **characterized in that** the of the medium in the pipeline (1) is determined and that in the event of an admissible deviation from a mean pressure value being exceeded the monitoring of the pipeline (1) for a reduction in the unobstructed internal cross section (A) is interrupted.

**6.** Method according to any one of the preceding Claims, **characterized in that** in order to suppress the influence of pressure fluctuations on the position of the valve, a pressure compensation is performed on the basis of a predetermined variation in the valve position as a function of the medium pressure.

**7.** Positioner for a control valve (2) having a position sensor (10) for detecting the position (x) of the valve (2) and a device (11) for evaluating the position detected, **characterized in that** the evaluation device (11) is designed in such a way that where the control valve (2) is used in a control circuit for adjustment to a constant rate of flow of a medium through a pipeline (1) for monitoring the pipeline in order to detect the slow reduction of the unobstructed internal cross section (A) by reference to the position (x) of a control valve (2), an initial position (x1) of the control valve (2) is registered and stored at a first time (t1), that at least a second position (x2) of the control valve (2) is determined at a second, later time (t2), that the time at which the position (x) of the valve (2) exceeds a predeterminable threshold value (s) for a valve opening is determined, and that a signal is emitted in order to indicate that the threshold value has been exceeded and/or the time at which it was exceeded.

## Revendications

**1.** Procédé de contrôle de la diminution lente de la section (A) transversale intérieure libre d'un conduit à l'aide de la position (x) d'une vanne (2) de régulation dans le conduit (1), **caractérisé en ce que**, pour un débit sensiblement constant d'un fluide dans la vanne (2) de régulation, on détermine à un premier instant (t1) une première position (x1) de la vanne (2) de régulation et on la mémorise, **en ce que** l'on détermine au moins à un deuxième instant (t2) ultérieur une deuxième position (x2) de la vanne (2) de régulation, **en ce que** l'on détermine quand la position (x) de la vanne (2) dépasse une valeur (s) de seuil pouvant être prescrite pour une ouverture de la vanne, et **en ce que** l'on émet un signal indiquant le dépassement et/ou l'instant du dépassement.

2. Procédé suivant la revendication 1, **caractérisé en ce que** l'on prescrit la valeur (s) de seuil en fonction de la première position (x1) de la vanne (2) de régulation, notamment pour une ouverture de 80 %, rapportée à la plage de réglages entre l'ouverture complète de la vanne et la première position (x1).

3. Procédé suivant la revendication 1 ou 2, **caractérisé en ce qu'**on lisse le signal de position par un filtre (16) passe-bas, notamment en formant une moyenne mobile, avant de déterminer la position de la vanne.

4. Procédé suivant l'une des revendications précédentes, **caractérisé en ce que** l'on détermine la variation en fonction du temps de la position (x) de la vanne (2) de régulation et on évalue l'instant où il est à prévoir que la position (x) de la vanne (2) de régulation dépassera la valeur (s) de seuil qui peut être prescrite.

5. Procédé suivant l'une des revendications précédentes, **caractérisé en ce que** l'on détermine la pression du fluide dans le conduit (1) et **en ce que**, s'il se produit un dépassement d'un écart admissible par rapport à une valeur moyenne de la pression, on interrompt le contrôle de la diminution de la section (A) transversale intérieure libre du conduit (1).

6. Procédé suivant l'une des revendications précédentes, **caractérisé en ce que**, pour supprimer l'influence de fluctuations de pression sur la position de la vanne, on effectue une compensation de pression au moyen d'une dépendance déterminée à l'avance de la position de la vanne en fonction de la pression des fluides.

7. Régulateur de position pour une vanne (2) de régulation ayant un indicateur (10) de position pour relever la position (x) de la vanne (2) et un dispositif (11) d'exploitation de la position relevée, **caractérisé en ce que** le dispositif (11) d'exploitation est tel que, lorsque l'on utilise la vanne (2) de régulation dans un circuit régulant à un débit constant un fluide dans le conduit (1) pour contrôler la diminution lente de la section (A) transversale intérieure libre du conduit à l'aide de la position (x) de la vanne (2) de régulation, on détermine à un premier instant (t1) une première position (x1) de la vanne (2) de régulation et on la mémorise, **en ce que** l'on détermine à un deuxième instant (t2) ultérieur au moins une deuxième position (x2) de la vanne (2) de régulation, **en ce que** l'on détermine quand la position (x) de la vanne (2) dépasse une valeur (s) de seuil pouvant être prescrite d'une ouverture de vanne, et **en ce que** l'on émet un signal pour indiquer le dépassement et/ou l'instant de dépassement.

FIG 1

FIG 2